# EUROPEAN PATENT APPLICATION

(11) **EP 2 345 877 A1**
(43) Date of publication of application: **20.07.2011**
(21) Application number: 11150631.7
(22) Date of filing: 11.01.2011
(51) Int. Cl.: G01F 23/296

(54) **Level measurement for liquid level in a tube**

(30) Priority: 13.01.2010 NL 2004087
(71) Applicant: Van Reekum Materials B.V., 7333 NS Apeldoorn (NL)
(72) Inventor: Gootjes, Paul Albert, 7475 SJ, Markelo (NL)
(74) Representative: Dokter, Hendrik Daniel

(57) **Abstract**

Monitoring device for monitoring a liquid level in a monitoring pipe, comprising an acoustic transducer which can be placed on the monitoring pipe and a processor coupled thereto, wherein the transducer and the processor are received in a shared housing, which housing has an elongate form, and the transducer and the display are received in respective distal parts of the housing.

## Description

The invention relates to a monitoring device for monitoring a liquid level in a monitoring pipe, comprising an acoustic transducer which can be placed on the monitoring pipe and a processor coupled thereto.

Such a monitoring device is per se known. In the known monitoring device the transducer is coupled via a cable to the processor which is received in a housing also comprising a battery, a display and control buttons.

The transducer of the known monitoring device is adapted for placing on an easily accessible, round monitoring pipe with a standardized outer diameter.

The per se known monitoring device is less suitable for a measurement in a monitoring pipe which is difficult to access, for instance because this monitoring pipe is provided with a protective outer pipe protruding thereabove, or for measuring the liquid level in a monitoring pipe with a non-standard outer diameter.

It is an object of the invention to provide a monitoring device with which the liquid level can be determined easily and quickly in a monitoring pipe which is difficult to access or in a monitoring pipe with a non-standard diameter. This monitoring device must be easy to operate and of robust construction.

These objects are achieved, and other advantages gained, with a monitoring device of the type specified in the preamble, wherein according to the invention the transducer and the processor are received in a shared housing.

A shared housing provides the advantage that an external connecting cable is not present between transducer and processor, while the housing can be formed such that it provides sufficient grip to manipulate the transducer toward and onto the relevant monitoring pipe.

In an embodiment of a monitoring device according to the invention the housing has an elongate form and the transducer and the display are received in respective distal parts of the housing.

The distal parts are for instance connected here by an elongate connecting part which preferably has a smaller cross-section than the distal part in which the transducer is received.

Owing to its design an elongate housing, the distal parts of which are connected by an elongate connecting part with a smaller cross-section than the distal part in which the transducer is received, is particularly suitable for placing of the transducer onto a monitoring pipe enclosed by an outer pipe protruding thereabove.

In a practically advantageous embodiment the part of the housing in which the display is received is formed as handgrip which is provided for instance on its outer end remote from the transducer with an operating means, such as a push-button or switch.

In another embodiment the part of the housing in which the transducer is received is provided with a convex surface part formed for co-action with the monitoring pipe.

This embodiment provides the advantage that in the case of a monitoring pipe with a diameter within a determined range the transducer can always be placed fittingly on this monitoring pipe, irrespective of the diameter of this monitoring pipe.

Although the monitoring device according to the invention can in principle be applied in any monitoring pipe irrespective of its diameter, in a practically particularly advantageous embodiment the transducer thereof is placeable on a monitoring pipe with an outer diameter in the range of 25 to 63 mm.

The invention will be elucidated hereinbelow on the basis of an exemplary embodiment, with reference to the drawings.

In the drawings
Fig. 1 is a perspective view of an embodiment of a monitoring device according to the invention, and
Fig. 2 is a schematic view of the monitoring device shown in fig. 1 in operative mode.

Corresponding components are designated in the figures with the same reference numerals.

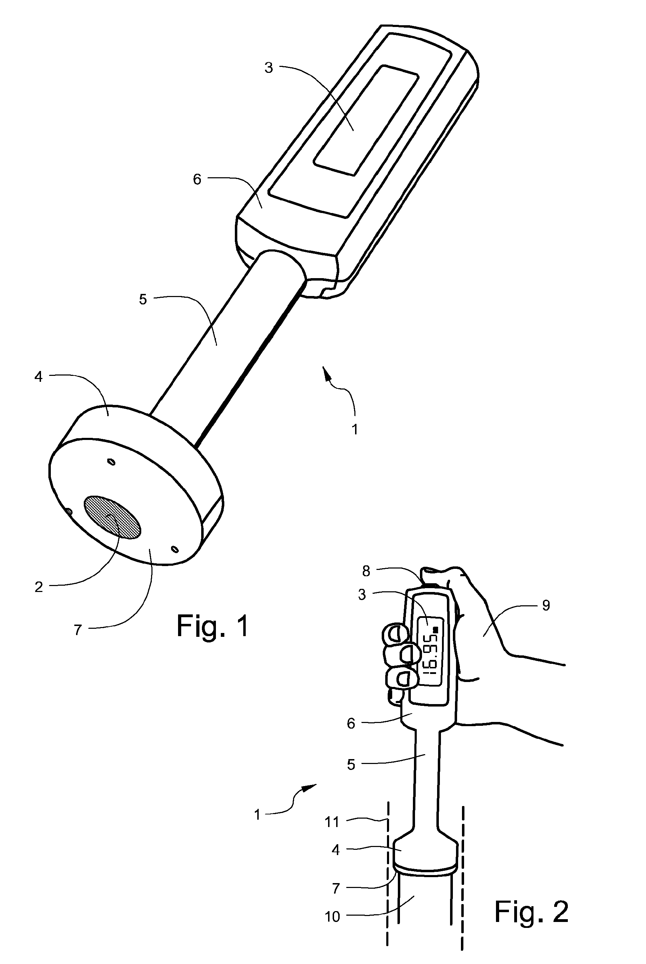

Fig. 1 shows a monitoring device 1 with a housing assembled from two parts 4, 6 placed distally relative to each other and connected by an elongate intermediate part 5. An acoustic transducer 2 is received in the lower distal part 4 in fig. 1. This transducer 2 is a per se known transducer for transmitting and receiving a sound signal. Transducer 2 is controlled by a processor (not shown) received in lower distal part 4 or upper distal part 6. In order to achieve that measuring device 1 can be placed in properly fitting manner on a monitoring pipe 10 (shown in fig. 2), the underside of the lower distal part 4 is provided with an outer surface 7 with a slightly convex form. The upper distal part 6 of the housing is formed as a handgrip in which an LED screen 3 is placed and which is provided on its top side with a push-button 8 (shown in fig. 2) with which device 1 is operated. Handgrip 6 also forms the housing for two 1.5 V batteries (not shown) which supply the power for the processor, transducer 2 and display 3.

Fig. 2 shows monitoring device 1 of fig. 1 in an operative mode, placed on a monitoring pipe 10. Monitoring device 1 can be operated with the thumb of one hand 9 by pressing push-button 8 on the outer end of handgrip 6 remote from transducer 2. The length of connecting part 6, and the relatively small diameter thereof compared to the diameter of lower part 4 of the housing, make it easy to place transducer 2 on monitoring pipe 10 even if the latter is enclosed by a protective pipe 11 protruding thereabove.

In a monitoring device according to the invention use is made of per se known sonar technology, according to which an acoustic signal is transmitted by transducer 2, which signal is reflected by the liquid level (not shown) in monitoring pipe 10 and subsequently received by transducer 2. The distance between the top of monitoring pipe 10 and the liquid level is calculated by the processor from the measured time difference between transmitting and receiving and the per se known sound velocity, this distance then being shown on display 3. In order to correct the sound velocity for temperature fluctuations in the medium above the liquid level in monitoring pipe 10 (air in the case the monitoring device is applied for measuring a groundwater level in open terrain), the processor can be programmed with a table for a season-dependent temperature correction, or can be coupled to a thermometer.

With a monitoring device according to the invention it is thus possible to measure the liquid level up to a depth of 20 m, with an accuracy of 1 cm, in a monitoring pipe with an outer diameter of 25 to 63 mm.

## Claims

1. Monitoring device (1) for monitoring a liquid level in a monitoring pipe (10), comprising an acoustic transducer (2) which can be placed on the monitoring pipe (10) and a processor coupled thereto, **characterized in that** the transducer (2) and the processor are received in a shared housing (4, 5, 6).

2. Monitoring device (1) as claimed in claim 1, further comprising a display (3), **characterized in that** the housing (4, 5, 6) has an elongate form and the transducer (2) and the display (3) are received in respective distal parts (4, 6) of the housing (4, 5, 6).

3. Monitoring device (1) as claimed in claim 2, **characterized in that** the distal parts (4, 6) are connected by an elongate connecting part (5).

4. Monitoring device (1) as claimed in claim 3, **characterized in that** the elongate connecting part (5) has a smaller cross-section than the distal part (4) in which the transducer (2) is received.

5. Monitoring device (1) as claimed in any of the claims 2-4, **characterized in that** the distal part (6) in which the display (3) is received is formed as handgrip.

6. Monitoring device (1) as claimed in claim 5, **characterized in that** the handgrip (6) is provided on its outer end remote from the transducer (2) with an operating means (8) .

7. Monitoring device (1) as claimed in any of the claims 1-6, **characterized in that** the part (4) of the housing (4, 5, 6) in which the transducer (2) is received is provided with a convex surface part (7) formed for co-action with the monitoring pipe (10) .

8. Monitoring device (1) as claimed in any of the claims 1-7, **characterized in that** the transducer (2) is placeable on a monitoring pipe (10) with an outer diameter in the range of 25 to 63 mm.
